(19) Europäisches Patentamt
European Patent Office
Office européen des brevets

(11) Veröffentlichungsnummer: **0 253 364**
**A1**

(12) # EUROPÄISCHE PATENTANMELDUNG

(21) Anmeldenummer: **87110166.3**

(51) Int. Cl.4: **G06F 9/38**

(22) Anmeldetag: **14.07.87**

(30) Priorität: **16.07.86 DE 3624044**

(43) Veröffentlichungstag der Anmeldung:
**20.01.88 Patentblatt 88/03**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Jakob, Karl-Heinz, Dipl.-Ing.(FH)**
**Kellerstrasse 17**
**D-8000 München 80(DE)**

(54) **Verfahren und Schaltungsanordnung zur Bearbeitung von unbedingten Sprungbefehlen in nach dem Fliessbandprinzip arbeitenden Datenverarbeitungsanlagen.**

(57) Gesonderter Befehlszähler (PPC) im Aufbereitungsprozessor (PLU) berechnet im Vorlauf zum eigentlichen Maschinenbefehlszähler (PC) bezogen auf die Adressenrechnungsebene (AR) des Befehlsverarbeitungsfließbandes die jeweilige Folgebefehlsadresse bei linearem Programmablauf, so daß bei unbedingten Sprungbefehlen (BAL, BALR) mit Eintragung der Folgebefehlsadresse in ein vorgegebenes Register durch den Befehlsausführungsprozessor (EXU) dieser rechtzeitig in den Parameterbereitstellungspfad (PPA/B) eingeschleust werden kann und unnötige Verlustzyklen auf der Befehlsausführungsebene (AF) eingespart werden. Die zusätzliche Abspeicherung in einem Registerkonfliktspeicher (RCB) schafft bei einem nachfolgend festgestellten Registerkonflikt in Verbindung mit der Konfliktüberwachungseinrichtung (RCC) die Möglichkeit der Konfliktbereinigung und der Einsparung weiterer Verlustzyklen, da der richtige Registerinhalt rechtzeitig aus dem Registerkonfliktspeicher (RCB) entnommen werden kann. Außerdem Beschleunigung beim Betrieb im Sprungfolgemodus, da die jeweilige Sprungsbefehlsadressse vom Befehlsausführungsprozessor (EXU) unmittelbar aus der Folgebefehlsadresse durch Subtraktion der zugehörigen Befehlslänge (AMPL) ermittelt werden kann.

PCM
ST
TREND
BRATAK
OP-CODE
ST-RCC
ST-PSCP
RCC
BR
CLBRA
SELPBRA
COBNOT
CLPPCR
ST-PAD
MM/CACHE
IB
IR
PAD
PSCP
RCB-HIT
MUX3
UPDATE
ST-RCB
PAD A/B
IL
RCB
CP
PLU
EXU
SELBRA
AMPL
DEC
ADD
PPCR
AD-B
MUX2
PBRA
MUX
I-AD
PPC
PPA/B
PA/B
LDPPA/B
P-TRACER
PC
BRA
ADRBUS
FEOM-CL
FIG 4

EP 0 253 364 A1

Xerox Copy Centre

# Verfahren und Schaltungsanordnung zur Bearbeitung von unbedingten Sprungbefehlen in nach dem Fließbandprinzip arbeitenden Datenverarbeitungsanlagen

Die Erfindung betrifft ein Verfahren und eine Schaltungsanordnung zur Bearbeitung von unbedingten Sprungbefehlen in nach dem Fließbandprinzip arbeitenden mikroprogrammgesteuerten Datenverarbeitungsanlagen entsprechend dem Oberbegriff des Oberbegriffes des Patentanspruches 1.

Bei der nach dem Fließbandprinzip erfolgenden Befehlsausführung werden die einzelnen Phasen einer Befehlsbearbeitung für mehrere Befehle gleichzeitig überlappend ausgeführt, so daß nach einer Vorlaufzeit mit jedem Fortschaltetakt des Fließbandes im Prinzip ein Befehl beendet werden kann - man siehe Elektronische Rechenanlagen, 1973 Heft 2, Seiten 60 bis 65, insbesondere Abschnitt 2.5 "Befehlspipeline", Seite 63/64. Dieser Idealablauf läßt sich jedoch nur erreichen, wenn keine störenden Ereignisse auftreten, die zu Verzögerungen führen. Solche Störungen des Fließbandablaufes können hervorgerufen werden, wenn Sprungebefehle auftreten oder wenn im voraus bereitsgestellte BVefehle, Adressen oder Operanden von vorangehend bearbeiteten Befehlen nachträglich noch geändert werden.

Derartige Störungen oder Konflikte führen zwangsläufig zur Unterbrechungen bei der Befehlsausführung, und dadurch bedingte Wartezyklen oder Leerzyklen verringern die Leistungsfähigkeit der Datenverarbeitungsanlage. Es sind daher eine Reihe von Vorkehrungen zu treffen, um die Auswirkungen von Störungen oder Konflikten möglichst klein zu halten.

Bei der Behandlung von unbedingten Sprungbefehlen vom Typ BAL, BALR - man siehe z.B. Siemens Druckschrift D 15/5104-04 "Zentraleinheiten: Siemens-System 7.500 und 7.700 - Beschreibung und Befehlsliste", Seiten 10-38 und 10-39 - kann zwar in der Interpretationsphase bereits festgestellt werden, ob der Sprung erfüllt is oder nicht. Da aber die mit diesen Sprungbefehlen verbundene Übernahme der linearen Folgebefehlsadresse als mögliche Rücksprungadresse in ein durch den Befehl bezeichnetes allgemeines Register erst bei der Ausführung dieses Sprungbefehles erfolgt, führt dies bei nichterfüllten Sprungbefehlen vielfach zu Konflikten, wenn die im Register abgespeicherte Adresse für die Aufbereitung des oder eines weiteren Folgebefehls bereits benötigt wird. Die weitere Aufbereitung des linearen Folgebefehls bei nichterfülltem Sprung muß daher abgebrochen werden, bis der Sprungbefehl ausgeführt ist und die benötigte Folgebefehlsadresse im angegebenen Register zur Verfügung steht.

Andererseits zeigt der Befehlzähler bei der Übergabe eines Befehles an die Ausführungseinheit immer diesen noch auszuführenden Befehl an. Erst mit Beginn der Ausführung dieses Befehls wird der Befehlzählerstand dann um die Befehlslänge dieses Befehls erhöht und kennzeichnet dann erst den linearen Folgebefehl, obwohl dieser vom Aufbereitungsprozessor bereits - soweit möglich - aufbereitet ist.

Da bei Sprungbefehlen des Typs BAL oder BALR immer die Folgebefehlsadresse des linearen Folgebefehls vom Befehlsführungsprozessor in ein vorgegebenes Register einzutragen ist, kann wegen der verspäteten Fortschaltung des Befehlszählers die Folgebefehlsadresse nicht rechtzeitig im Parameterpuffer für den Ausführungsprozessor bereitgestellt werden. Vor der Ausführung eines jeden dieser Sprungbefehle wird daher für den Ausführungsprozessor ein Leerzyklus eingefügt, um Zeit für die notwendige Parameteraufbereitung zu gewinnen - man siehe z.B. Siemens Druckschrift U 64 068-J, Seiten 260-170, 260-175 und 260-178.

Sowohl diese Leerzyklen als auch die mit solchen Befehlen häufig verbundenen Registerkonflikte bei nichterfüllten Sprungbedingungen mindern die Leistungsfähigkeit des Befehlsausführungsprozessors. Es ist daher Aufgabe der Erfindung, derartige Leerzyklen soweit wie möglich zu vermeiden und davon ausgehend auch die Gefahr von mit derartigen Befehlen verknüpften Registerkonflikten auszuschalten, um die Leistungsfähigkeit der Datenverarbeitungsanlage zu steigern.

Diese Aufgabe wird bei dem Verfahren gemäß der Erfindung durch die kennzeichnenden Merkmale des Patentanspruches 1 gelöst.

Danach wird unabhängig vom zentralen und auf den Ausführungsprozessor ausgerichteten Befehlszähler im Aufbereitungsprozessor eine eigene Befehlszählung mit einem gesonderten Befehlszähler durchgeführt, der wie der zentrale Befehlszähler mit jeder neuen Befehlsfolge neu gestartet wird. Unmittelbar nach der Interpretation eines Befehles steht daher in der anschließenden Adressenrechnungsphase dieses Befehles bereits die Folgebefehlsadresse zu Verfügung, die bei einem unbedingten Sprungsbefehl somit zeitgerecht im Parameterpuffer des Ausführungsprozessors zur Verfügung gestellt werden kann. Der bisher vor Ausführung eines unbedingten Sprungbefehles jeweils notwendige Leerzyklus des Ausführungsprozessors kann daher entfallen.

Da bei unbedingten Sprungbefehlen mit erfülltem Sprung sich in der Aufbereitung des Folgebefehls immer ein Verzug von mindestens zwei Arbeitszyklen wegen des notwendigen Neulesens der Befehle nach der Adressenrechnung ergibt, wirkt sich diese Einsparung des Leerzyklus in erster Linie bei unbedingten Sprungbefehlen mit nichterfülltem Sprung voll aus. Aber auch bei unbedingten Sprungbefehlen mit erfülltem Sprung kommt die Einsparung zum Tragen, wenn der Vorläuferbefehl des Sprungbefehles zu seiner Ausführung mindestens drei Arbeitszyklen benötigt. Auch im Konfliktfall mit dem Folgebefehl führt die um einen Arbeitszyklus früher erfolgende Ausführung des Sprungbefehles dazu, daß der Folgebefehl ebenfalls um einen Arbeitszyklus jeweils früher ausgeführt werden kann.

Die eigenständige Befehlzählung im Befehlsaufbereitungsprozessor in Abhängigkeit von der laufenden Befehlsaufbereitung schafft andererseits in einfacher Weise die Voraussetzung einer möglichen Konfliktbereinigung entsprechend Patentanspruch 2 als Weiterbildung der Erfindung, da bei einem während der Interpretationsphase des nächsten oder übernächsten linearen Folgebefehls festgestellten Konfliktfall in der parallel dazu ablaufenden Adressenrechnungsphase des Sprungbefehles bereits die richtige Befehlsadresse des linearen Folgebefehls durch den gesonderten Befehlszähler ermittelt wird und daher die Adressenrechnungsphase für den Folgebefehl unmittelbar an die des Sprungbefehles anschließen kann, ohne daß eingeschobene Leerzyklen erforderlich werden. Bei jedem dieser Konfliktfälle lassen sich daher zwei weitere Leerzyklen auf der Ausführungsebene einsparen, so daß die Leistungsfähigkeit, insbesondere wegen des hohen Anteils an Konfliktfällen, hierdurch ebenfalls beträchtlich gesteigert wird.

Andererseits schafft die gesonderte Befehlszählung im Aufbereitungsprozessor beim Betrieb im Sprungfolgemodus, bei dem die Adressen aller oder nur aller erfüllten Sprungbefehle in einen vorgegebenen Speicherbereich der Datenverarbeitungsanlage für Kontrollzwecke abgespeichert werden, die Möglichkeit, daß durch Ermittlung der jeweiligen Sprungbefehlsadresse aus der vom Befehlsaufbereitungsprozessor bereitgestellten Folgebefehlsadresse durch Subtraktion der zugehörigen Befehlslänge entsprechend Patentsanspruch 3 die Abspeicherung der Sprungbefehlensadressen durch den Befehlsausführungsprozessor viel - schneller abgewickelt werden kann. Dadurch wird ein zusätzlicher Austausch von Steuersignalen mit Zurücksetzen des Befehlsaufbereitungsprozessors und erneutem Wiederanlauf umgangen und die Anzahl der jeweils für die Sicherstellung der Sprungbefehlsadresse benötigten Arbeitszyklen wesentlich verringert.

Der Aufwand für die erfindungsgemäße Schaltungsanordnung entsprechend Patentanspruch 4 ist denkbar gering. Weiterbildungen dazu ergeben sich aus den Ansprüchen 5 bis 8. Auch der Aufwand für die Erweiterung der erfindungsgemäßen Schaltungsanordnung entsprechend den Patentansprüchen 9 und 10 zum Zwecke der zusätzlichen Konfliktbereinigung ist verhältnismäßig gering.

Einzelheiten der Erfindung seien nachfolgend anhand eines in der Zeichnung dargestellten Ausführungsbeispieles näher erläutert. Im einzelnen zeigen

FIG 1 Ablaufdiagramme für die Befehlsbearbeitung in den einzelnen Fließbandstufen zur Erläuterung der Verlustzeiteneinspeicherung bei nicht erfüllten unbedingten Sprungbefehlen,

FIG 2 Ablaufdiagramme entsprechend denen von FIG 1 für erfüllte unbedingte Sprungbefehle,

Fig 3 Ablaufdiagramme entsprechend denen von FIG 1 zur Erläuterung der Verlustzeiteinsparungen bei nicht erfüllten unbedingten Sprungbefehlen mit nachfolgendem Konfliktfall,

FIG 4 ein schematisches Blockschaltbild für die gesonderte Befehlszählung und Steuerung der Konfliktbereinigung gemäß der Erfindung,

FIG 5 ein Blockschaltbild des gesonderten Befehlszählers von FIG 4 und

FIG 6 ein Ablauf-und Impulsdiagramm zur Erläuterung der Arbeitsweise von FIG 4 und FIG 5.

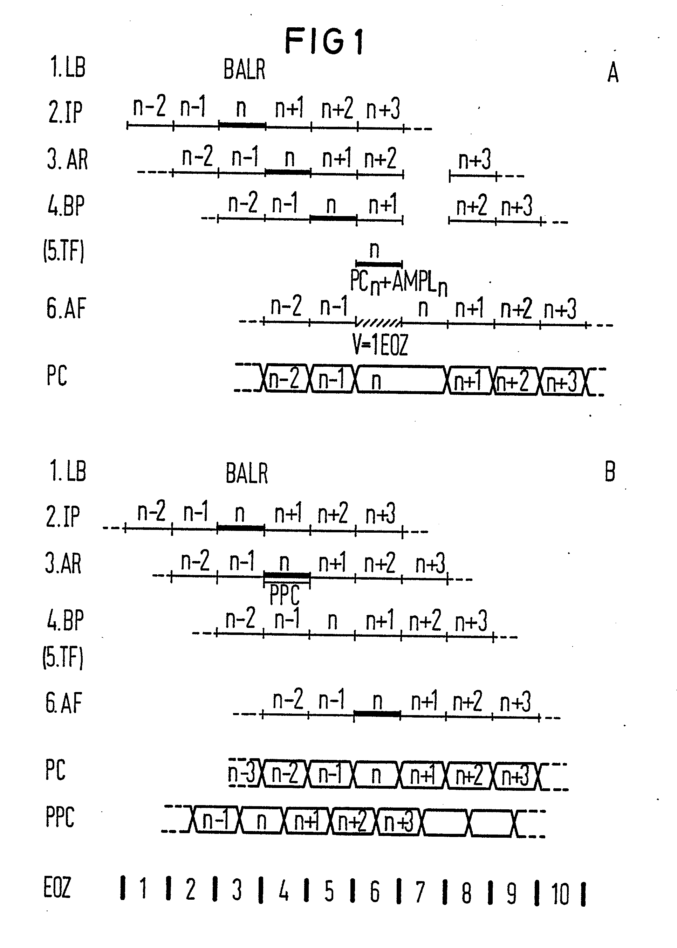

Die Ablaufdiagramme A und B von FIG 1 zeigen jeweils die Ablauffolgen der Befehle n-2 bis n+3 während der Arbeitszyklen EOZ1 bis EOZ10 des Fließbandes in den einzelnen Verarbeitungsstufen 1 bis 6, die sich auf das Lesen der Befehle (LB), auf die Befehlsinterpretation (IP), auf die Adressenrechnung (AR), auf die Parameterbereitstellung (PB), auf eine möglicherweise notwendige Transferphase (TF) und auf die Befehlsausführung (AF) beziehen.

Bei beiden Ablaufdiagrammen A und B ist der Befehl n ein unbedingter Sprungbefehl vom Typ BAL oder BALR mit nicht erfülltem Sprung, was bereits während der Interpretationsphase IP während des Arbeitszyklus EO23 erkennbar ist, so daß die Befehlsfolge linear mit dem nächsten Befehl n+1 fortgesetzt werden kann, als hätte kein Sprungsbefehl vorgelegen.

Bei beiden Ablaufdiagrammen A und B ist in der mit PC bezeichneten Zeile auch die vom Befehlszähler PC angezeigte Befehlsadresse angegeben. Dieser Maschinenbefehlszähler PC zeigt während des ersten Ausführungszyklus eines Befehls stets auf den in der Ausführungsebene AF zur Ausführung anstehenden Befehl, so daß bei den gezeigten Befehlen mit jeweils nur einem Ausführungszyklus - 1EO-Befhle - der Befehlszähler PC jeweils erst am Ende des jeweiligen Ausführungszyklusses auf die Adresse des Folgebefehls umgeschaltet wird.

Während des Arbeitszyklus EOZ4, also zum Beispiel während der Adressenrechnungsphase für den Sprungebefehl n, zeigt der Befehlszähler PC erst die Adresse des sich in der Ausführung befindlichen Befehls n-2 an. In diesem Zyklus kann also die Adresse für den linearen Folgebefehl n+1, die bei der Ausführung des Befehls n in einem vorgegebenen Register abzuspeichern ist, noch nicht berechnet werden. Die benötigte Adresse für den Befehl n steht erst im Arbeitszyklus EOZ6 zur Verfügung und kann erst dann durch die Addition der Befehlslänge AMPL des Sprungbefehles n hochgerechnet werden. Das erfordert in der Regel einen zusätzlichen Zyklus, der in der Transferebene TF angedeutet ist, bevor der Sprungbefehl n tatsächlich ausgeführt werden kann, so daß vor Ausführung eines jeden Sprungbefehles vom Typ BAL oder BALR mit nichterfülltem Sprung ein Verlust V von einem Arbeitszyklus auftritt.

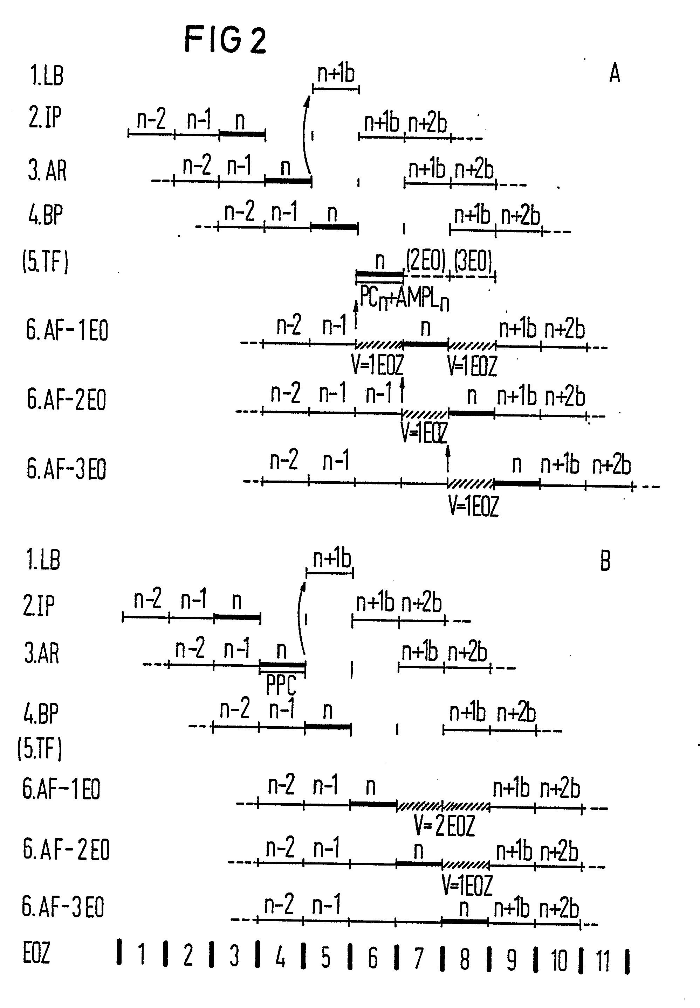

Bei unbedingten Sprungbefehlen mit erfülltem Sprung gemäß dem Ablaufdiagramm A von FIG 2 tritt dieser Verlust bei 1EO-und 2EO-Befehlen nicht auf, da das Nachladen und Einschleusen der neuen Befehlsfolge n+1b, n+2b.... für die Sprungrichtung wenigstens einen Verlust von zwei Arbeitszyklen EOZ ergibt, bis der erste Befehl n+1b dieser Folge die Ausführungsebene AF erreicht hat - man siehe Zeilen 6.AF-1EO und 6.AF-2EO. Bei 3EO-Befehlen entsprechend Zeile 6.AF-3EO oder Befehlen mit mehr Arbeitszyklen für die Ausführung kommt jedoch der Verlust von einem Arbeitszyklus bei jedem Sprungbefehl wieder voll zum Tragen, da eine Bereitstellung der Folgebefehlsadresse erst mit dem letzten Ausführungszyklus des Vorläuferbefehls n-1 möglich ist, was in Zeile 5.TF gestrichelt angedeutet ist.

Die Ablaufdiagramme B von FIG 1 und FIG 2 zeigen den Befehlsfolgeablauf für den Fall, daß gemäß der Erfindung ein gesonderter Befehlszähler PPC vorgesehen ist, der im Vorlauf zum eigentlichen Maschinenbefehlszähler PC die Adresse des für die Adressenrechnungsphase AR jeweils anstehenden Befehles anzeigt.

Zu Beginn der Adressenrechnung eines Befehles, zum Beispiel des Sprungbefehles n, ist daher immer die zugehörige Befehlsadresse verfügbar, so daß zeitlich parallel dazu die Folgenbefehlsadresse n+1 ermittelt werden kann, was in Zeile 3.AR durch die zusätzliche Angabe PPC angedeutet ist. Der auf der Ausführungsebene AF mit jedem Sprungbefehl entsprechend dem Ablaufdiagramm A von FIG 1 verbundene Verlust von einem Arbeitszyklus. EOZ entfällt daher bei Verwendung eines gesonderten Befehlszählers PPC entsprechend dem Ablaufdiagramm B von FIG 1.

Demgegenüber bringt die Verwendung des gesonderten Befehlszählers PPC, wie aus dem Vergleich der Ablaufdiagramme A und B von FIG 2 ersichtlich ist, bei unbedingten Sprungbefehlen mit erfülltem Sprung für 1EO-und 2EO-Befehle keinen Zeitgewinn für die Ausführung der Folgebefehle n+1b, n+2b, usw. Erst bei Befehlen mit im vorliegenden Fall mehr als zwei Ausführungszyklen erfolgt die Ausführung der Folgebefehls n+1b usw. jeweils um einen Arbeitszyklus EOZ früher, also beispielsweise bereits im Arbeitszyklus EOZ9 statt im Arbeitszyklus EOZ10 - man siehe die Zeilen 6.AF - 3EO.

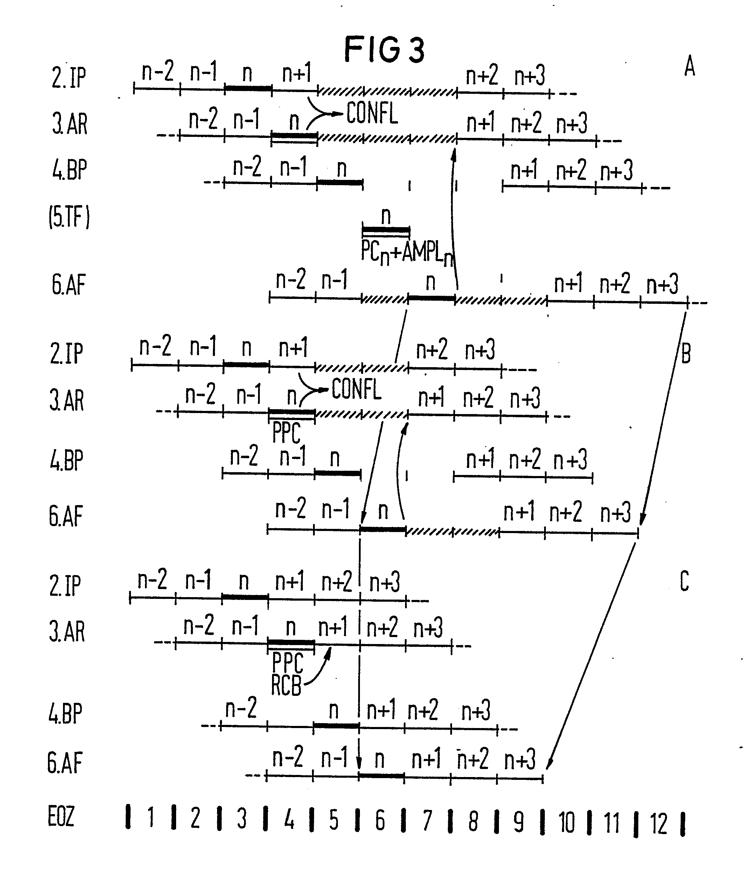

Die Verwendung des gesonderten Befehlszählers PPC führt besonders dann zu Einsparungen von Verlustzyklen auf der Ausführungsebene AF, wenn der lineare Folgebefehl n+1 die vom Sprungbefehl n in ein vorgegebenes Register zu speichernde Folgebefehlsadresse zur Adressenrechnung benötigt. Die Ablaufdiagramme A und B von FIG 3 verdeutlichen diesen Fall.

Bei der Interpretation des Folgebefehls n+1 wird in an sich bekannter Weise festgestellt, daß der für die nachfolgende Adressenrechnung benötigte Registerinhalt durch den noch nicht ausgeführten Vorläuferbefehl, nämlich den Sprungbefehl n, noch verändert werden kann und die anschließende Adressenrechnungsphase AR im Arbeitszyklus EOZ5 noch nicht durchgeführt werden kann. Durch den ermittelten Konflikt CONFL wird die Weiterbehandlung des Befehles n+1 durch den Aufbereitungsprozessor vorübergehend gestoppt, bis nach Ausführung des Sprungbefehles n im Arbeitszyklus EOZ7 die Adressenrechnung für den Befehl n+1 im Arbeitszyklus EOZ8 durchgeführt werden kann, der dann im Arbeitszyklus EO210 sur Ausführung gelangt.

Beim Ablaufdiagramm B in FIG 3 ist dieselbe Situation zugrundegelegt, nur kommt aufgrund des gesonderten Befehlszählers PPC der Befehl n bereits um einen Arbeitszyklus früher zur Ausführung, so daß auch der Folgebefehl n+1 um einen Arbeitszyklus früher, also im Arbeitszyklus EOZ9, ausgeführt werden kann.

Wird dagegen entsprechend dem Ablaufdiagramm C von FIG 3 zugrundeliegenden Verfahren die vom gesonderten Befehlszähler PPC gelieferte und in einem Konfliktüberwachungsspeicher RCB zwischengespeicherte Folgebefehlsadresse im Konfliktfall für die Adressenrechnung des den Konflikt auslösenden Folgebefehls, zum Beispiel n+1, herangezogen, dann kann die Adressenrechnung für den Befehl n+1 sofort nach der für den Befehl n ausgeführt werden, so daß im Vergleich zum Ablaufdiagram B der Befehl n+1 zwei Arbeitszyklen früher, d.h. bereits im Arbeitszyklus EOZ7 statt im Arbeitszyklus EOZ9, zur Ausführung gelangt.

Beim erläuterten Beispiel von FIG 3 wurde davon ausgegangen, daß bereits der erste auf den Sprungbefehl n folgende lineare Folgebefehl n+1 vom Konflikt betroffen ist. Es könnte im vorliegenden Falle auch der zweite Folgebefehl n+2 sein. Allgemein gilt, daß jeder von einem Konflikt betroffene Folgebefehl, dessen Adressenrechnungsphase normalerweise vor Ausführung des Sprungbefehles n anlaufen würde, eine Einsparung von Verlustzyklen mit sich bringt, nur wird mit zunehmenden Abstand zum vorangegangenen Sprungbefehl n der Umfang der Einsparung geringer.

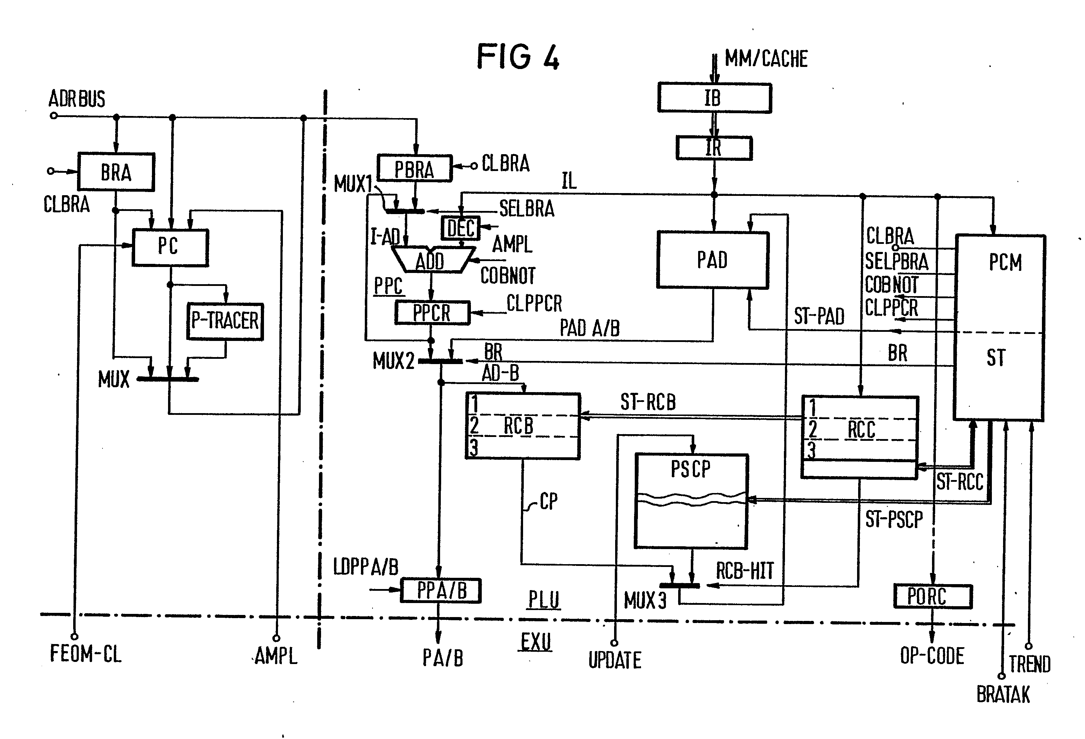

FIG 4 zeigt ein schematisches Blockschaltbild einer Anordnung mit gesondertem Befehlszähler PPC im Aufbereitungsprozessor PLU und einem Registerkonflikt speicher RCB zur Zwischenspeicherung der vom gesonderten Befehlszähler PPC jeweils gelieferten Folgebefehlsadresse von Sprungbefehlen des Typs BAL und BALR, die im Konfliktfall für die Konfliktbereinigung herangezogen werden.

Gezeigt sind im wesentlichen nur die für das Verständnis erforderlichen Baugruppen des Befehlsaufbereitungsprozessors PLU mit einigen Schnittstellenleitungen zum Befehlsaufführungsprozessor EXU sowie im linken Teil der für beide Prozessoren in an sich bekannter Weise gemeinsam vorgesehen und auf Ausführungsebene arbeitende Maschinenbefehlszähler PC. Bei linearem Befehlsablauf wird dieser Maschinenbefehlszähler PC bei jedem ersten Arbeitszyklus zur Ausführung eines Befehls mit dem Takt FEOM-CL angesteuert und so sein Zählerstand um die Länge AMPL des zugehörigen Befehls erhöht. Bei einer Programmverzweigung wird dagegen das dem Maschinenbefehlszähler PC vorgeschaltete Register BRA über das Adressenleitungssystem ADRBUS mit der Verzweigungsadressse geladen, die dann in den Befehlszähler PC übernommen wird. Nicht gezeigt ist in diesem Zusammenhang die mit dem Befehlszähler PC gekoppelte Steuerung für das Befehlsvorauslesen zum Auffüllen des Befehlspuffers IB, der in an sich bekannter Weise mit der Schnittstelle zum Pufferspeicher CACHE und zum übergeordneten Hauptspeicher MM verbunden ist.

Aus den Befehlspuffer IB gelangen die Befehle nacheinander in das Befehlsregister IR zur Interpretation durch die Steuerung PCM/ST des Befehlsaufbereitungsprozessors PLU, die in an sich bekannter Weise die notwendigen Steuersignale bereitstellt.

Abhängig vom jeweiligen Befehl im Befehlsregister IR berechnet die nachgeschaltete Adressenrecheneinheit PAD in Verbindung mit gegebenenfalls im Registersatz PSCP gespeicherten Daten die notwendigen Adressen und stellt diese bereit, damit sie nach Bedart in die Parameterpufferregister PPA/B übernommen und gegebenenfalls zum Lesen von Operanden usw. verwendet werden können.

Weiterhin ist mit dem Ausgang des Befehlsregisters IR und der Steuerung PCM/ST eine Konfliktüberwachungseinrichtung RCC zur Erkennung von Registerkonflikten gekoppel. Dieser Konfliktüberwachungseinrichtung RCC werden in an sich bekannter Weise Schreibaddressen für die Register im Registersatz PSCP der im Fließband bearbeiteten Befehle ab der Adressenrechnungsphase AR bis zur Rückmeldung der Ausführung durch den Befehlsausführungsprozessor EXU mit dem Signal TREND in fester Zuordnung der Befehle zu den einzelnen Fließbandstufen vorübergehend gespeichert und in der Interpretationsphase eines jeden neuen Befehls mit den Leseregisteradressen in diesem Befehl verglichen. Ergibt sich dabei mit einer Schreibregisteradresse eines vorangehend aufbereiteten Befehls eine Übereinstimmung, dann liegt ein Registerkonflikt vor, und der neue Befehl kann nicht weiter behandelt werden, d.h. in die Adressenrechnungsphase AR übergeleitet werden, bis der in den Konflikt verwickelte Vorläuferbefehl ausgeführt ist.

Auf die Adressenrechnungsphase AR folgt die Bereitstellungsphase BP zur Bereitstellung der für die Befehlsausführungs durch den Befehlsausführungsprozessor EXU benötigten Parameter und Operanden für die Übergabe an den Befehlsausführungsprozessor. Adressenparameter stehen beispielsweise in den Pufferregistern PPA und/oder PPB und Befehlsparameter im Register PORC an der Schnittstelle zum Befehlsausführungsprozessor EXU zeitgerecht zur Verfügung.

In Auswirkung der Erfindung sind neben den bisher beschriebenen Bausteinen im Befehlsaufbereitungsprozessor PLU noch ein gesonderter Befehlszähler PPC und ein gesonderter Registerkonfliktspeicher RCB vorgesehen.

Dem gesonderten Befehlszähler PPC, der gegenüber dem Maschinenbefehlszähler PC ausführlicher mit einem Addierer und einem nachgeschalteten Register PPCR dargestellt ist, ist in gleicher Weise ein an das Adressenleitungssystem ADRBUS angeschlossenes Register PBRA zur Aufnahme der Anfangsadresse einer jeden neuen Befehlsfolge vorgeschaltet, so daß der Addierer ADD über den Auswahlschalter MUX1 wahlweise aus dem Register PBRA oder dem Ergebnisregister PPCR gespeist werden kann, während die bei linearem Befehlsablauf aufzuaddierende Befehlslänge AMPL unmittelbar aus der im Befehlsregister IR zur Verfügung stehenden Befehlslängenangabe IL durch die Einrichtung DEC ermittelt und gepuffert wird.

Beide Register BRA und PBRA werden parallel zueinander mit dem Taktimpuls CLBRA geladen, der jeweils von dem das Lesen einer neuen Befehlsfolge einleitenden Signal RI an das Speichersystem MM/CACHE abgeleitet wird, so daß die neue Anfangsadresse in Verbindung mit dem nachfolgend ausgelösten Signal SELBRA dem Addierer ADD zugeleitet werden kann. Der gesonderte Befehlszähler PPC wird jeweils mit der Aufnahme der Bearbeitung eines Befehls in der Adressenrechnungsphase AR durch Taktung des Ergebnisregisters PPCR mit dem Takt CLPPCR fortgeschaltet, wobei abhängig von dem Signal COBNOT entweder die am Eingang des Addierers anstehende Befehlsadresse I-AD unverändert oder durch die Befehlslänge AMPL erhöht übernommen wird.

Die neue Folgebefehlsadresse steht daher im Laufe der Adressenrechnungsphase am Ausgang des gesonderten Befehlszählers PPC bereits zur Verfügung, und zwar so rechtzeitig, daß bei einem erkannten unbedingten Sprungbefehl oder während des Betriebs im Sprungfolgemodus bei jedem Sprungbefehl mit dem Signal BR über den nachgeschalteten Auswahlschalter MUX2 zu Beginn des nachfolgenden Arbeitszyklus im Parameterpufferregister PPB zur Übernahme in den Befehlsausführungsprozessor EXU zur Verfügung steht.

Parallel dazu erfolgt eine Einspeicherung in den Registerkonfliktspeicher RCB, der wie die Konfliktüberwachungseinrichtung RCC vorzugsweise aus Registern zur Speicherung aufgebaut ist, in denen die zugeführten Folgenbefehlsadressen von Sprungbefehlen in fester Zuordnung zu den im Fließand bearbeiteten Befehlen bis zu deren Ausführung gespeichert werden, wobei die jeweilige Zuordnung in einfacher Weise durch die in der Konfliktüberwachungseinrichtung RCC bereits vorhandene Zuordnungssteuereinrichtung sichergestellt werden kann. Der Leseausgang des Registerkonfliktspeichers RCB ist in Auswirkung der Erfindung über einen weiteren Auswahlschalter MUX3 am Ausgang des Registersatzes PSCP mit dem Eingang der Adressenrecheneinrichtung PAD verbindbar, so daß entweder der Inhalt eines ausgewählten Registers aus dem Registersatz PSCP oder aber ersatzweise das benötigte Datum aus dem Registerkonfliktspeicher RCB übernommen werden kann. Die Umsteuerung auf den Konflikt bereinigungsweg CP erfolgt durch das Signal RCB-HIT der Konfliktüberwachungseinrichtung RCC im Konfliktfall mit einem vorausgegangenen unbedingten Sprungbefehl vom Typ BAL oder BALR. Parallel dazu liefert die Konfliktüberwachungseinrichtung ein von den einzelnen Vergleichern zur Konfliktüberwachung abgeleitetes Auswahlsignal an den Registerkonfliktspeicher RCB, das den in den Konflikt verwickelten Vorläuferbefehl kennzeichnet und damit die Auswahl der zugehörigen Folgebefehlsadresse sichert. Die Steuersignalleitungen für die Einrichtungen PAD, RCC und RCB sind der Einfachheit halber in Bündeln ST-PAD, ST-RCC und ST-RCB zusammengefaßt dargestellt.

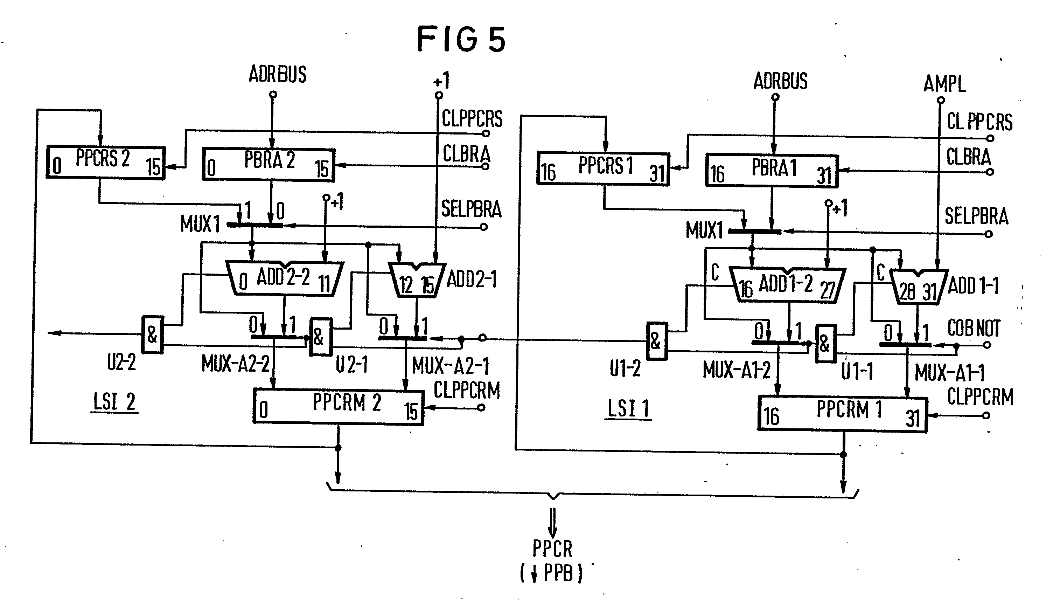

FIG 5 zeigt ein bevorzugtes Ausführungsbeispiel für den gesonderten Befehlszähler PPC von FIG 4, der aus zwei gleichartig aufgebauten integrierten Schaltkreisbausteinen LSI1 und LSI2 gebildet ist, die jeweils eine Adressenhälfte, nämlich die Bits 16 bis 31 bzw. die Bits 0 bis 15, verarbeiten und in die das vorgeschaltete Register PBRA mit einbezogen ist.

Der Addierer ADD besteht jeweils aus zwei Teiladdierern ADD1-1, ADD1-2 bzw. ADD2-1 und ADD2-2, von denen jeweils der erste Teiladdierer ADD1-1 bzw. ADD2-1 eine der Bitstellenzahl der Befehlslänge AMPL angepaßte Arbeitsbreite hat und im vorliegenden Falle nur die vier niederwertigsten Bits 28 bis 31 bzw. 12 bis 15 erfaßt. Bei allen übrigen Teiladdierern ist dagegen der Eingang für den zweiten Summanden fest auf den Wert 1 eingestellt, so daß am Ausgang immer ein um 1 erhöhter Teilwert geliefert wird.

Jedem Teiladdierer ist ein Auswahlschalter MUX-A1-1 bzw. MUX-A1-2 bzw. MUX-A2-1 bzw. MUX-A2-2 nachgeschaltet, derentweder den jeweils am Eingang des zugehörigen Teiladdierers anliegenden Teilwert oder den vom Teiladdierer gelieferten erhöhten Teilwert auswählt. Dies hängt jeweils vom Ausgansübertrag C der vorangehenden Teiladdierer für die niederwertigeren Bitstellengruppen der Adresse bzw. beim Teiladdierer ADD1-1 für die niedrigste Bitstellengruppe vom Signal COBNOT ab. Solange keine Befehlsverzweigung erfolgt und daher linear weitergeschaltet wird, gilt das Signal COBNOT=1, so daß der um die Befehlslänge AMPL erhöhte niedrigste Teilwert freigegeben wird. Ergibt sich dabei ein Ausgangsübertrag C am Teiladdierer ADD1-1 wird das Signal COBNOT über das UND-Glied U1-1 zum nächsten Auswahlschalter MUX-A1-2 weitergeleitet usw., bis in der Kette der Teiladdierer ein Ausgangsübertrag C ausbleibt und die die Fortleitungskette für das Signal COBNOT bildenden UND-Glieder U1-2, U2-1 und U2-2 gesperrt bleiben, so daß nachfolgend jeweils der unveränderte Teilwert freigegeben wird. Die so von den einzelnen Auswahlschaltgliedern, zum Beispiel MUX-A1-1 und MUX-A1-2 bereitgestellten Teilwerte werden dann je Baustein in ein Ergebnisregister, zum Beispiel PPCRM1, übernommen, so daß die Ausgänge der Ergebnisregister zum Beispiel PPCRM1 und PPCRM2, aller Bausteine, zum Beispiel LSI1 und LSI2, zusammengefaßt die neue Folgebefehlsadresse liefern.

Neben dem Ergebnisregister PPCRM1 bzw. PPCRM2 ist in jedem Baustein jeweils ein weiteres Register PPCRS1 bzw. PPCRS2 vorgesehen, über das der Rückkopplungsweg zum Eingang des Addierers ADD verläuft. Beide Register werden mit getrennten Übernahmetakten CLPPCRM und CLPPCRS in Master-Slave-Manier beaufschlagt, um den Ausgang des Ergebnisregisters vom Eingang des Addierers zu entkoppeln.

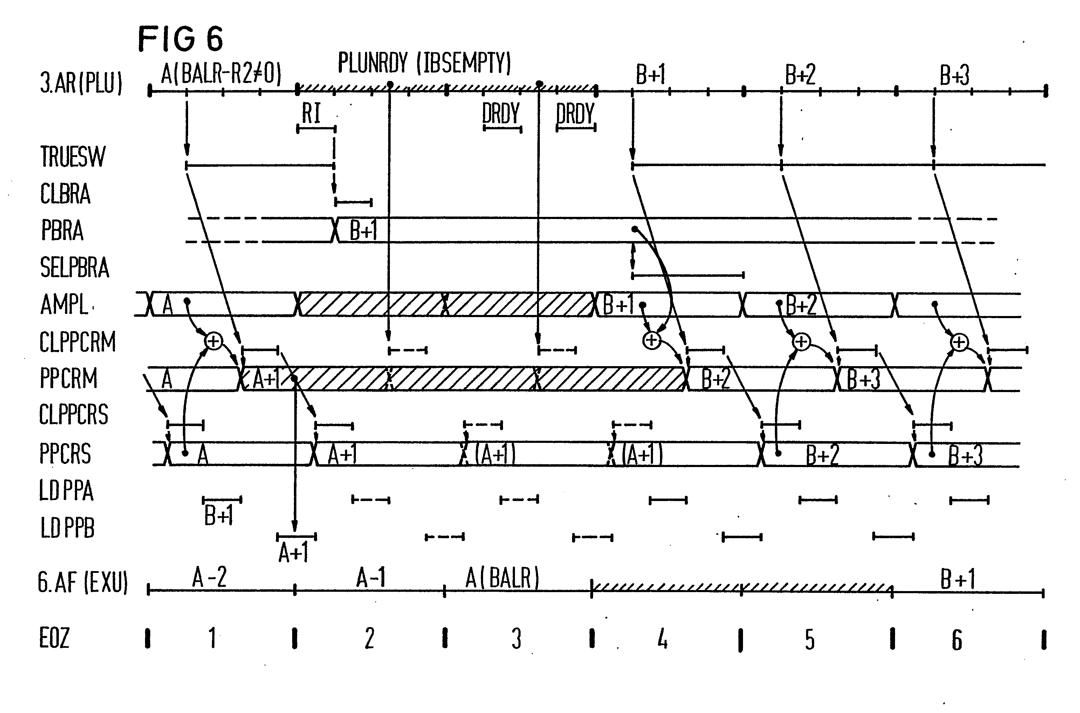

Ein zugehöriges Ablauf-und Impulsdiagramm ist in FIG 6 wiedergegeben, das in der obersten Zeile 3.AR (PLU) und in der untersten Zeile 6.AF (EXU) jeweils die Befehlsfolgen in der Adressenrechnungsphase AR bzw. in der Ausführungsphase AF zeigt. Dabei ist angenommen, daß der Befehl A ein unbedingter Sprungsbefehl BALR mit erfülltem Sprung wegen R2 ≠ 0 ist.

Nach Ermittlung der Sprungadresse wird daher das Lesesignal RI zu Beginn des nachfolgenden Arbeitszyklus EOZ2 ausgelöst und die weitere Adressenrechnung gestoppt, weil der Befehlspuffer IB den Nachfolgebefehl nicht gespeichert enthält. Mit den Speichersignalen DRDY werden dann innerhalb des nachfolgenden Arbeitszyklus EOZ3 die benötigten Befehle bereitgestellt und der erste Befehl B+1 der neuen Folge interpretiert, so daß nach zwei Ruhezyklen die Adressenrechnung für den Befehl B+1 und dessen Folgebefehle B+2 und B+3 fortgesetzt werden kann.

Mit dem vom Lesesignal RI abgeleiteten Taktimpuls CLBRA wird die Verzweigungsaddresse für den Befehl B+1 in das Register PBRA übernommen, was aber erst später zum Tragen kommt, da das Signal SELBRA = 0 vorliegt und daher der Auswahlschalter MUX1 in FIG 4 und FIG 5 den Ausgang des Ergebnisregisters PPCR bzw. PPCRM... auf den Addierer des gesonderten Befehlszählers PPC durchgeschaltet hat.

Im Regelfall steht mit der Aufnahme der Adressenrechnung für einen Befehl, zum Beispiel den Befehl A, die zugehörige Befehlslänge AMPL ab Beginn des zugehörigen Adressenrechnungszyklus zur Verfügung, so daß beim Signal SELPBRA = 0 die vom Zwischenregister PPCRS auf den Eingang des Addierers ADD einwirkende zugehörige Befehlsadresse um die Befehlslänge AMPL erhöht wird, was durch Pfeile und das Zeichen ⊕ angedeutet ist. Die vom Addierer ADD errechnete neue Folgebefehlsadresse für den Befehl A+1 wird dann im selben Arbeitszyklus mit dem Takt CLPPCRM, der vom Signal TRUESW während des letzten Arbeitszyklus der zu einem Befehl ausgeführten Adressenrechnung abgeleitet wird, in das Ergebnisregister PPCRM übernommen und mit einem weiteren Taktimpuls CLPPCRS an das Zwischenregiser PPCRS weitergeleitet.

Da es sich im vorliegenden Fall beim Befehl A um einen unbedingten Sprungbefehl mit erfülltem Sprung handelt, wird die während des Arbeitszyklus EOZ1 bereits berechnete Verzweigungsadresse für den Befehl B+1 mit dem Ladeimpuls LDPPA von der Adressenrecheneinrichtung PAD über den Auswahlschalter MUX2 abhängig vom Steuersignal BR in den Parameterpuffer PPA übernommen und mit einem weiteren Ladeimpuls LDPPB die Adresse für den linearen Folgebefehl A+1 nach Umschaltung des Auswahlschalters MUX2 aus dem Ergebnisregister PPCR des gesonderten Befehlszählers PPC an das zweite Parameterpufferregister PPB übergeben. Die Umschaltung des Auswahlschalters MUX2 abhängig vom Steuersignal BR erfolgt in diesem Falle unmittelbar abhängig vom interpretierten Befehl BALR. Die in den beiden Parameterpuffern PPA und PPB bereitsgestellten Adressen könnten dann im nachfolgenden Arbeitszyklus vom Befehlsausführungsprozessor EXU übernommen werden, so daß die bei der Ausführung des zugehörigen Sprungbefehles A im Arbeitszyklus EOZ3 ohne Verzug zur Verfügung stehen.

Beim Betrieb im Sprungfolgemodus wird das Umsteuersignal BR für den Auswahlschalter MUX2 für den Fall, daß nur die Adressen aller erfüllten Sprungebefehle abzuspeichern sind, auch vom Signal BRATAK des Befehlsausführungsprozessors EXU abgeleitet, das die Erfüllung der jeweiligen Sprungbedingung anzeigt. Für den Fall, daß die Adressen aller Sprungsbefehle zu speichern sind, erfolgt die Ableitung des Steuersignals BR unmittelbar abhängig von derArt der interpretierten Befehle.

Bei der in FIG 6 zugrundegelegten Befehlsfolge wird nach der Adressenrechnung für den unbedingten Sprungbefehl ab dem Arbeitszyklus EOZ2 die Adressenrechnung AR gestoppt, da der nachfolgende Befehl für die Adressenrechnung noch nicht zur Verfügung steht und demzufolge das Signal TRUESW entfällt. Infolgedessen bleiben auch die Takte CLPPCRM und CLPPCRS aus, so daß die Inhalte der Register PPCRM und PPCRS unverändert bleiben, bis mit Beginn des Arbeitszyklus EOZ4 die Adressenrechnung für den Verzweigungsbefehl B+1 aufgenommen werden kann. Mit dem erstmaligen erneuten Auftreten des Signales TRUESW nach einem Lesesignal RI wird das Signal SELBRA wirksam und schaltet statt des Registers PPCRS das Register PBRA mit der Verzweigungsadresse auf den Addierer ADD durch, der demzufolge die Adresse des Folgebefehls B+2 ermittelt. Am Ende des laufenden Arbeitszyklus EOZ4 wird dann wieder auf das Zwischenregister PPCRS zurückgesteuert, so daß die Befehlsrechnung durch den gesonderten Befehlszähler PPC linear fortgesetzt werden kann.

## Ansprüche

1. Verfahren zur Bearbeitung von unbedingten Sprungbefehlen (z.B. BAL, BALR) in nach dem Fließbandprinzip arbeitenden Datenverarbeitungsanlagen mit einem Befehlsaufbereitungsprozessor (PLU) für Befehlslesen (LB), Befehlsinterpretation (IP), Adressenrechnen (AR) und Parameterbereitstellung (BP), mit einem Befehlsausführungsprozessor (EXU) für die eigentliche Befehlsausführung (AF) und mit einem gemeinsamen Puffer-und Arbeitsspeicher, wobei ein zentraler Befehlzähler (PC) jeweils nach Übergabe der Parameter zu einem Befehld (n) in einen Parameterpuffer (PB) des Befehlsausführungsprozessors (EXU) mit Aufnahme der Befehlsausführung durch diesen auf den nachfolgend auszuführenden Befehl (n + 1) eingestellt wird,
**dadurch gekennzeichnet,** daß jeweils mit Beginn einer neuen Befehlsfolge ein gesonderter Befehlzähler (PPC) des Aufbereitungsprozessors (PLU) mit der Adresse des jeweils ersten Befehls der Folge geladen wird, daß nach der Interpretation eines jeden Befehls dieser Folge der Befehlzählerstand des gesonderten Befehlszählers (PPC) in der nachfolgenden Phase des Adressenrechnens (AR) um die Länge (IL) dieses Befehls (n) erhöht und damit die Adresse des linearen Folgebefehls (n+1) ermittelt wird und daß bei der Aufbereitung von unbedingten Sprungbefehlen (z.B. BAL, BALR), die eine Abspeicherung der Adresse des Folgebefehls (n+1) in einem vorgegebenen allgemeinen Register bewirken, der vom gesonderten Befehlzähler (PPC) für den jeweiligen linearen Folgebefehl (n+1) ermittelte Befehlzählerstand zeitgerecht in den Parameterpuffer (PB) für den Ausführungsprozessor (EXU) weitergeleitet wird, sodaß bereits mit Beginn der Ausführung des unbedingten Sprungbefehles (n) die Adresse des linearen Folgebefehls (n+1) für die Abspeicherung in dem durch den Sprungbefehl bezeichneten allgemeinen Register zur Verfügung steht.

2. Verfahren nach Anspruch 1,
**dadurch gekennzeichnet,** daß die vom gesonderten Befehlzähler (PPC) jeweils vorauseilend bereitgestellte Adresse des linearen Folgebefehles (n+1) gleichzeitig in einen mehrstufigen Registerkonfliktspeicher (RCB) mit Zuordnung zum jeweils zugehörigen Befehl (n) eingespeichert und die Zuordnung der gespeicherten Adresse mit der Weiterleitung des Befehls (n) von Bearbeitungsstufe zu Bearbeitungsstufe des Aufbereitungsprozessors (PLU) geändert wird, bis der zugehörige Befehl (n) im Ausführungsprozessor (EXU) zur Ausführung gelangt, und daß bei einem durch einen der unmittelbar nachfolgenden linearen Folgebefehle (z.B.n+1 bzw. n+2) ausgelösten Registerkonflikt die dem Sprungbefehl (n) zugehörige, im Registerkonfliktspeicher (RCB) bereits vorhandene Adresse des Folgebefehls (n+1) für die durch den Folgebefehl (n+1) ausgelöste Adressenrechnung verwendet wird.

3. Verfahren nach Anspruch 1 oder 2,
**dadurch gekennzeichnet.** daß beim Betrieb im Sprungfolgemodus (AUDIT) die jeweilige Sprungbefehlsadresse aller bzw. nur aller erfüllten Sprungbefehle vom Aufbereitungsprozessor (EXU) aus der vom gesonderten Befehlzähler (PPC) des Aufbreitungsprozessors (PLU) über den Parameterpuffer (PB) bereitgestellten Folgeadresse durch Substraktion der Befehlslänge (IL) des jeweiligen Sprungbefehls ermittelt und abgespeichert wird.

4. Schaltungsanordnung zur Durchführung des Verfahrens nach Anspruch 1, **gekennzeichnet** durch einen gesonderten Befehlszähler (PPC) im Aufbereitungsprozessor (PLU), der eingangseitig mit Leitungen für die Zuführung der Befehlsadresse (I-AD) des jeweils in der Adressenrechnungsphase (AR) des Aufbereitungsprozessors (PLU) bearbeiteten Befehles und für die Zuführung der Länge (AMPL) dieses Befehles gekopplet und der ausgangsseitig mit den Eingangsleitungen der die bereitzustellenden Parameter aufnehmenden Pufferregister (PPA/B) koppelbar ist, so daß jeweils mit jeder ausgeführten Befehlsbehandlung (Signal TRUESW) in der Adressenrechnungsphase (AR) gleichzeitig die Adresse des linearen Folgebefehls berechnet wird und noch im selben Arbeitszyklus in das zugehörige Parameterpufferregister (PPB) übernommen werden kann.

5. Schaltungsanordnung nach Anspruch 4,
**dadurch gekennzeichnet,** daß der gesonderte Befehlszähler (PPC) aus einem Addierer (ADD) und wenigstens einem Ergebnisregister (PPCR) besteht, dessen Ausgang mit dem entsprechenden Eingang des Addierers (ADD) koppelbar ist.

6. Schaltungsanordnung nach Anspruch 5,
**dadurch gekennzeichnet,** daß zwischen dem Ausgang des Ergebnisregisters (PPCRM) und dem Eingang des Addierers (ADD) ein zweites Register (PPCRS) vorgesehen ist und daß beide Register (PPCRM und PPCRS) innerhalb desselben Arbeitszyklus in umgekehrter Folge mit einem Übernahmeimpuls (CLPPCRS, CLPPCRM) beaufschlagt werden.

7. Schaltungsanordnung nach Anspruch 5 oder 6,
**dadurch gekennzeichnet,** daß der Addierer (ADD) in zwei Teiladdierer (ADD1-1 und ADD1-2) unterteilt ist, von denen der eine Teiladdierer (ADD1-1) unabhängig von der Bitstellenzahl der Befehlsadresse (I-AD) lediglich eine vorgegebene Anzahl (z.B. 4) der niederwertigsten Bitstellen (z.B. 28 bis 31) und die zugeführte Befehlslänge (AMPL) berarbeitet, während der andere Teiladdierer (ADD1-2) die restlichen Bitstellen (z.B. 0 bis 27) der jeweiligen Befehlsadresse (I-AD) verarbeitet und jeweils einen um den konstanten Wert 1 erhöhten Teilwert liefert, daß beiden Teiladdierern (ADD1-1 und AAD1-2) Auswahlschalter (MUX-A1-1), MUX-A1-2) nachgeschaltet sind, die wahlweise die den Teiladdierereingängen zugeführten Befehlsadressenteile oder die von den Teiladdiererausgängen gelieferten geänderten Befehlsadressenteile an die Eregebnisregister (PPCRM) weiterleiten, und daß die Einstellung der Auswahlschalter (MUX-A1-1, MUX-AI-2) von einem Steuersignal (COBNOT) abhängig ist, das auf den dem ersten Teiladdierer (ADD1-1) nachgeschalteten Auswahlschalter (MUX-A1-1) direkt einwirkt, während es beim dem zweiten Teiladdierer (ADD1-2) nachgeschalteten Auswahlschalter (MUX-A1-2) nur bei Vorliegen eines Ausgangsübertrags (C) am ersten Teiladdierer (ADD1-1) in gleicher Weise wirksam wird.

8. Schaltungsanordnung nach einem der Ansprüche 5 bis 7, **dadurch gekennzeichnet,** daß der gesonderte Befehlszähler (PPC) aus einer vorgegebenen Anzahl (z.B. 2) gleichartiger integrierter Schaltkreisbausteine (z.B. LSI1 und LSI2) aufgebaut ist, die jeweils eine vorgegebene Anzahl (z.B. 16) von Bitstellen der Befehlsadresse (I-AD) verarbeiten, daß mit Ausnahme des die Befehlslänge (AMPL) als zweiten Summanden verarbeitenden ersten Teiladdierers (ADD1-1) alle übrigen Teiladdierer (z.B. ADD1-2, ADD2-1, ADD2-2) der gleichartigen Bausteine (LSI1, LSI2) jeweils mit einem konstanten Wert 1 als zweiten Summanden beaufschlagt werden, daß allen Teiladdierern (ADD1-1 bis ADD2-2) aller Bausteine Auswahlschalter (MUX-A1-1 bis MUX-A2-2) nachgeschaltet sind, die wahlweise die den Teiladdiereingängen zugeführten Befehlsadressenteile oder die von den Teiladdiererausgängen gelieferten geänderten Befehlsadressenteile an das bausteinindividuelle Ergebnisregister (PPCRM1 bzw. PPCRM2) weiterleiten, und daß die Einstellung der Auswahlschalter (MUX-A1-1 bis MUX-A2-2) aller Bausteine (LSI1, LSI2) von einem Steuersignal (COBNOT) abhängig ist, das auf den dem ersten Teiladdierer (ADD1-1) nachgeschalteten Auswahlschalter (MUX-A1-1) direkt einwirkt, während es bei den allen übrigen Teiladdierern (AAD1-2 bis ADD2-2) nachgeschalteten Auswahlschaltern (MUX-A1-2 bis MUX-A2-2) jeweils nur bei gleichzeitigem Vorliegen eines Ausgangsübertrages (C) bei allen vorangehenden Teiladdierern für die rangniedrigeren Bitstellengruppen der Befehlsadresse (I-AD) wirksam wird.

9. Schaltungsanordnung nach einem der Ansprüche 4 bis 8 zur Durchführung des Verfahrens nach Anspruch 2, **gekennzeichnet** durch einen mehrstufigen Registerkonfliktspeicher (RCB) zur Zwischenspeicherung der jeweils vom gesonderten Befehlszähler (PPC) gelieferten Folgebefehlsadressen mitEinrichtungen zur Festlegung der Zuordnung zum jeweils zugehörigen Befehl in Abhängigkeit von dessen Weiterleitung von Verarbeitungsstufe zu Verarbeitungsstufe im Aufbereitungsprozessor (PLU), mit Einrichtungen (RCC) zur Auswahl der jeweils benötigten Folgebefehlsadresse aus dem Registerkonfliktspeicher (RCB) bei einem nachfolgend festgestellten Registerkonflikt und mit Einrichtungen (MUX3) zur Weiterleitung der aus dem Registerkonfliktspeicher (RCB) ausgewählten Folgebefehlsadresse an die vorhandene Adressenrecheneinrichtung (PAD).

10. Schaltungsanordnung nach Anspruch 9, **dadurch gekennzeichnet,** daß die Einrichtungen zur Festlegung der Zuordnung zu den einzelnen sich im Befehlsaufbereitungsprozessor (PLU) in Bearbeitung befindlichen Befehlen gemeinsam für die Einrichtungen zur Überwachung von auftretenden Registerkonflikten (RCC) und für den Registerkonfliktspeicher (RCB) vorgesehen sind und daß die Einrichtungen zur Auswahl der jeweils benötigten Folgebefehlsadresse aus dem Registerkonfliktspeicher (RCB) mit Einrichtungen zur Feststellung der Zuordnung des in einen Konflikt verwickelten, bereits aufbereiteten Befehls gekoppelt sind.

# FIG 1

A
1.LB BALR
2.IP n-2 n-1 n n+1 n+2 n+3
3.AR n-2 n-1 n n+1 n+2 n+3
4.BP n-2 n-1 n n+1 n+2 n+3
(5.TF) n
PCn+AMPLn
6.AF n-2 n-1 n n+1 n+2 n+3
V=1EOZ
PC n-2 n-1 n n+1 n+2 n+3
B
1.LB BALR
2.IP n-2 n-1 n n+1 n+2 n+3
3.AR n-2 n-1 n n+1 n+2 n+3
PPC
4.BP n-2 n-1 n n+1 n+2 n+3
(5.TF)
6.AF n-2 n-1 n n+1 n+2 n+3
PC n-3 n-2 n-1 n n+1 n+2 n+3
PPC n-1 n n+1 n+2 n+3
EOZ 1 2 3 4 5 6 7 8 9 10

FIG 2
A
1.LB
2.IP
3.AR
4.BP
(5.TF)
6.AF-1EO
6.AF-2EO
6.AF-3EO
n-2
n-1
n
n+1b
n+2b
(2EO)
(3EO)
$PC_n$+$AMPL_n$
V=1EOZ
B
PPC
V=2EOZ
EOZ
1 2 3 4 5 6 7 8 9 10 11

FIG 3
A
2.IP
3.AR
4.BP
(5.TF)
6.AF
n-2
n-1
n
n+1
n+2
n+3
CONFL
PCn+AMPLn
B
PPC
C
RCB
EOZ
1
2
3
4
5
6
7
8
9
10
11
12

FIG 4
MM/CACHE
IB
IR
ADRBUS
BRA
CLBRA
PC
P-TRACER
MUX
PBRA
CLBRA
MUX1
IL
SELBRA
DEC
I-AD
AMPL
ADD
COBNOT
PPC
PPCR
CLPPCR
PAD A/B
MUX2
BR
AD-B
PAD
ST-PAD
CLBRA
SELPBRA
COBNOT
CLPPCR
PCM
BR
ST
ST-RCB
1
2
RCB
3
1
2
RCC
3
CP
PSCP
ST-RCC
ST-PSCP
RCB-HIT
LDPPA/B
PPA/B
PLU
MUX3
PORC
EXU
FEOM-CL
AMPL
PA/B
UPDATE
OP-CODE
TREND
BRATAK

FIG 5
ADRBUS
+1
CLPPCRS
CLBRA
SELPBRA
PPCRS 2
PBRA 2
MUX 1
ADD 2-2
ADD 2-1
U2-2
MUX-A2-2
U 2-1
MUX-A2-1
CLPPCRM
LSI 2
PPCRM 2
ADRBUS
AMPL
CL PPCRS
CLBRA
SELPBRA
PPCRS 1
PBRA 1
MUX 1
ADD 1-2
ADD 1-1
COB NOT
U1-2
MUX-A1-2
U1-1
MUX-A1-1
CLPPCRM
LSI 1
PPCRM 1
PPCR
(↓PPB)

FIG 6
3.AR(PLU)
A(BALR-R2≠0)
PLUNRDY (IBSEMPTY)
B+1
B+2
B+3
RI
DRDY
DRDY
TRUESW
CLBRA
PBRA
B+1
SELPBRA
AMPL
A
B+1
B+2
CLPPCRM
PPCRM
A
A+1
B+2
B+3
CLPPCRS
PPCRS
A
A+1
(A+1)
(A+1)
B+2
B+3
LD PPA
B+1
LD PPB
A+1
6.AF (EXU)
A-2
A-1
A(BALR)
B+1
EOZ
1
2
3
4
5
6

Europäisches Patentamt

# EUROPÄISCHER RECHERCHENBERICHT

Nummer der Anmeldung

EP 87 11 0166

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 163 740 (FUJITSU LTD) * Seite 8, Zeile 23 - Seite 10, Zeile 18; Seite 12, Zeile 20 - Seite 13, Zeile 5; Seite 14, Zeile 1 - Seite 15, Zeile 21 * --- | 1 | G 06 F 9/38 |
| A | EP-A-0 036 093 (TOKYO SHIBAURA DENKI K.K.) * Seite 13, Zeilen 2-11; Seite 25, Zeile 34 - Seite 26, Zeile 23; Seite 29, Zeilen 9-30 * --- | 1 | |
| A | US-A-4 287 561 (LIPTAY) * Spalte 5, Zeile 20 - Spalte 7, Zeile 21 * --- | 2 | |
| A | IBM TECHNICAL DISCLOSURE BULLETIN, Band 26, Nr. 4, September 1983, Seiten 2076-2080, New York, US; D. MELTZER: "Elimination of address generation interlocks on sequences of load instructions" * Insgesamt * --- -/- | 2 | RECHERCHIERTE SACHGEBIETE (Int. Cl. 3): G 06 F 9/38 |

Der vorliegende Recherchenbericht wurde für alle Patentansprüche erstellt.

| Recherchenort | Abschlußdatum der Recherche | Prüfer |
|---|---|---|
| DEN HAAG | 17-09-1987 | QUESSON C.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

Europäisches Patentamt

# EUROPÄISCHER RECHERCHENBERICHT

Nummer der Anmeldung

EP 87 11 0166

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | IBM TECHNICAL DISCLOSURE BULLETIN, Band 19, Nr. 1, Juni 1976, Seiten 256-257, New York, US; L.C. EGGEBRECHT: "High performance functionally integrated memory address register for a small processor" * Insgesamt * | 1 | |

-----

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 17-09-1987 | QUESSON C.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82